# EUROPÄISCHE PATENTSCHRIFT

(11) **EP 0 730 486 B1**
(45) Veröffentlichungstag und Bekanntmachung des Hinweises auf die Patenterteilung: **27.01.1999**
(21) Anmeldenummer: 94930327.5
(22) Anmeldetag: 07.11.1994
(51) Int. Cl.: B01D 29/35, B01D 29/64

(54) **FILTEREINHEIT FÜR FLUIDE**
FILTER UNIT FOR FLUIDS
UNITE FILTRANTE POUR FLUIDES

(30) Priorität: 22.11.1993 CH 3490/93; 17.12.1993 CH 3775/93; 08.03.1994 CH 673/94
(43) Veröffentlichungstag der Anmeldung: 11.09.1996
(73) Patentinhaber: KAMPFER, Konrad, 8240 Thayngen (CH); Huder, Marcel, 6330 Cham (CH)
(72) Erfinder: HUDER, Marcel, CH-6330 Cham (CH)
(74) Vertreter: Patentanwaltsbüro Feldmann AG
(86) Internationale Anmeldenummer: IB9400344
(87) Internationale Veröffentlichungsnummer: WO9514521

(56) Entgegenhaltungen:
- EP-A- 0 450 170
- EP-A- 0 460 842
- DE-A- 3 027 997
- DE-A- 3 303 912
- FR-A- 2 237 663
- US-A- 1 993 214

## Beschreibung

Die vorliegende Erfindung betrifft eine Filtereinheit für Fluide mit einem Filtergehäuse und darin gelagerten Filtern, sowie je mindestens einer Fluidzufuhrleitung, einer Ableitung für das gereinigte Fluid und einer Ableitung für ungereinigtes Fluid, die alle mit Ventilen versehen sind.
Aus der DE-A-30 27 997 ist ein Filter bekannt, der mit einer beweglichen Bürste ausgerüstet ist.
Eine Vorrichtung zum Eindicken von Pulpe oder ähnlichen wässrigen Gemischen ist in der US-A-1'993'214 beschrieben.
Mehrere innerhalb eines konischen Filterelementes drehbeweglich gelagerte Paddel dienen dazu, das einzudickende Gemisch zu rühren, umzuwälzen und Feststoffablagerungen auf dem Filterelement zu entfernen. Die Paddel kommen dabei nicht in direkten Kontakt mit dem Filterelement, da dieses sonst beschädigt werden könnte. Die vertikale Lage des Rührwerkes mit den Paddeln kann relativ zum Filterelement nicht verändert werden.
Das Ruhr- und Reinigungswerk muss unablässig bewegt werden, um die Eindick- oder Filtrierleistung der Vorrichtung aufrechtzuerhalten.
In der EP-A-0'450'170 ist ein Brunnenregeneriergerät beschrieben, das zur Entfernung von Ablagerungen im Inneren eines Filterrohres mit einer auf- und abbewegbaren, rotierbaren Regeneriereinheit versehen ist. Die Regeneriereinheit sitzt am Ende eines Antriebs- und Versorgungsrohres und besteht aus einem Bürstenkopf mit Bürstenleisten und Hochdruckdüsen tragenden Verdrängungskörpern. Da die Länge der Regeneriereinheit nur einen Bruchteil der Länge des Filterrohres ausmacht, muss sie während der Reinigung im Rohr auf- und abbewegt werden. Der Brunnen muss für die Reinigung geöffnet werden, damit das Reinigungsgerät eingeführt werden kann. Das während der Reinigung aus dem Brunnen entnommene Wasser ist stark verschmutzt und kann daher nicht genutzt werden.
Aus der EP-A-0'460'842 ist ein selbstreinigender Filter bekannt, dessen planes Filtermedium mit einem Wasserstrahl gereinigt werden kann. Der Wasserstrahl kann mittels einer parallel zum Filtermedium beweglichen Düse bewegt werden, wodurch gewährleistet ist, dass ein wesentlicher Flächenanteil des Filterelementes mit dem Wasserstrahl gereinigt werden kann.

Filtereinheiten der eingangs genannten Art sind auf dem Markt seit Jahren bekannt. Insbesondere wird hier auf die verschiedenen Trinkwasserfilterkonstruktionen der Firma Katadyn Produkte AG in CH-8304 Wallisellen verwiesen. Die eigentliche Filtration in diesen Trinkwasserfiltern erfolgt mit Filterelementen, die als heterokapillare Keramikfilter ausgebildet sind und eine zylindrische Form aufweisen. Der hohlzylindrische Filter wird so betrieben, dass das ungefilterte Trinkwasser aussen an der Zylindermantelfläche anliegt und durch die heterokapillare Zylinderwand in den Hohlzylinder strömt. Dieser ist mit einem Silberquarzgranulat gefüllt und oben und unten mit einer Kappe verschlossen, wobei die untere Kappe einen Ausgang für das gereinigte Trinkwasser aufweist. Ein oder mehrere solcher Keramikfilterelemente sind auf einer Zwischenplatte befestigt, die dichtend im Filtergehäuse gehalten ist. Oberhalb dieser Zwischenplatte befindet sich somit das Rohwasser und unterhalb derselben das gereinigte Trinkwasser. Das Rohwasser enthält organische wie auch anorganische Verunreinigungen, die sich bei der Filtrierung an der Mantelwand des Keramikfilterelementes anlagern. Damit die Filterelemente nicht verstopfen und kein Klima für extremen bakteriellen Wachstum entsteht, müssen die einzelnen Filterelemente in regelmässigen zeitlichen Abständen gereinigt werden. Hierzu muss der Filtrierbetrieb gestoppt werden, das Filtergehäuse geöffnet und jedes einzelne Filterelement von Hand gereinigt werden. Entsprechend sind solche Trinkwasserfilter mit einer gesonderten, hydraulisch betriebenen Reinigungsbürste versehen, die an einer flexiblen Leitung ausserhalb des Filtergehäuses montiert ist. Im geöffneten Zustand des Filtergehäuses wird die Bürste von Hand über jedes einzelne Filterelement gestülpt und dann abgebürstet und abgespült. Je nach der Grösse des Trinkwasserfilters müssen bis zu über fünfzig einzelne Filterelemente gereinigt werden. Dies geschieht normalerweise während der üblichen Arbeitszeit und führt somit zu entsprechenden Betriebsunterbrüchen in den Restaurants, Hotels oder Getränkeabfüllfabriken.

Die gleiche Problematik ist selbstverständlich auch bei anderen Fluiden bekannt. Entsprechend ist die Erfindung nicht auf die Trinkwasserfiltrierung beschränkt. In der nachfolgenden Beschreibung wird zwar die Konstruktion als Trinkwasserfilteranlage beschrieben, kann jedoch ohne Modifikationen auch für andere Fluide verwendet werden.

Es ist folglich die Aufgabe der vorliegenden Erfindung, eine Trinkwasserfiltereinheit der eingangs genannten Art zu schaffen, die eine einfache Reinigung während der Aufrechterhaltung des Betriebes erlaubt. Diese Aufgabe löst eine Filtereinheit für Fluide mit den Merkmalen des Patentanspruches 1.

Insbesondere für den Einsatz in abgelegenen Gebieten und in Drittweltländern, wo eine zuverlässige elektrische Versorgung nicht gewährleistet ist, wird eine besonders einfache, rein mechanische Lösung vorgeschlagen gemäss Patentanspruch 2.

Unter Beibehaltung des generellen Erfindungsgedankens wird des weiteren eine Lösung vorgeschlagen, die einen vollautomatischen Betrieb erlaubt, die eine reine zeitgesteuerte Reinigung zulässt. Eine solche Lösung wird in den Ausführungen gemäss den Patentansprüchen 6-9 beschrieben.

In der Zeichnung ist ein Ausführungsbeispiel des Erfindungsgegenstandes in vereinfachter Form dargestellt.

Es zeigt:
- Figur 1: einen Längsschnitt durch eine Filtereinheit für Fluide mit einer automatischen Reinigung und
- Figur 2: einen Teilausschnitt einer solchen Filtereinheit im Antriebsbereich, welche zur manuellen Betätigung vorgesehen ist.
- Figur 3: einen Teilausschnitt einer ebensolchen Filtereinheit im Antriebsbereich, welche vom anliegenden Fluiddruck betätigbar ist, jedoch ohne Turbine arbeitet.

Da es sich hier lediglich um eine systematische Darstellung handelt, wurde eine Filtereinheit mit einem einzigen Keramikfilter gezeichnet. Selbstverständlich lassen sich jedoch auf demselben Prinzip Filtereinheiten mit einer beliebigen Anzahl in gleicher Weise aufgebauter Keramikfilter realisieren. In der nachfolgenden Beschreibung wird die erfindungsgemässe Filtereinheit für Fluide im Detail beschrieben, wobei als Beispiel eine Filtereinheit für Trinkwasser gewählt wurde.

Die Grösse der Trinkwasserfiltereinheit wird durch das Filtergehäuse 1 festgelegt. Im Gehäuse können selbstverständlich mehrere Filter angeordnet sein, wie sie nachfolgend noch beschrieben werden. Der generelle Aufbau wird hierdurch nicht verändert. Beim Filter handelt es sich um einen Keramikfilter, zum Beispiel einen heterokapillaren Keramikfilter. Das Filtergehäuse, welches eine beliebige Form aufweisen kann, ist durch mehrere generell horizontal verlaufende Platten in verschiedene Zonen unterteilt. Das gesamte Filtergehäuse 1 ist im Bereich eines Flansches 6 in einen Oberteil und einen Unterteil unterteilt. Zuoberst kann das Filtergehäuse 1 mit einem schwenkbaren Deckel 2 versehen sein, der den freien Zugang zu einer Steuerzone freigibt. Diese Steuerzone wird gegen unten von einer Abdeckplatte 3 begrenzt.
Unterhalb der Abdeckplatte 3 liegt die Antriebszone 4, die wiederum von einer Lagerplatte 5 gegen unten begrenzt ist.
Hierunter befindet sich dann die eigentliche Filterzone 8, in welcher der Filter 7 angeordnet ist. Der Keramikfilter 7 liegt mit seinem oberen Randbereich auf einen Filterträger 16 und im unteren Bereich auf eine Zwischenplatte 9 auf. Der Keramikfilter 7 ist sowohl im Filterträger 16 wie auch in der Zwischenplatte 9 dichtend gehalten. Unterhalb der Zwischenplatte 9 liegt der Ableitbereich 17, in dem ein Schmutzwassertrichter 10 angeordnet ist. Der Schmutzwassertrichter 10 mündet in den Schmutzwasserauslass 18 am unteren Ende des Filtergehäuses 1. Der Schmutzwasserauslass 18 lässt sich mittels einem Schmutzwasserschliessventil 15 öffnen und schliessen. Dieses Ventil kann je nach Ausführung manuell oder elektrisch betätigbar sein.

Der Keramikfilter 7 hat die Form eines konischen Zylinders und ist aus einem heterokapillaren Keramik hergestellt. Zur Erhöhung der Festigkeit kann der Keramikfilter mit einem Metall- oder Kunststoffnetz armiert sein. Im Bereich zwischen dem Keramikfilter und der Mantelwand des Filtergehäuses 1 ist die Filtrierzone 8 zwischen dem Filterträger 16 und der Zwischenplatte 9 mit einem antibakteriellen Mittel, beispielsweise einem Silberquarzgranulat, gefüllt. Das Silberquarzgranulat lässt sich über die Einfüllstutzen 19 in das Filtergehäuse 1 einbringen. Das zu reinigende Rohwasser wird über den Rohwasseranschluss 11 in die Antriebszone 4 geleitet und von dort über ein mechanisch oder elektrisch steuerbares Umlenkventil in die Filtrierzone 8 eingeleitet. In diesem Fall ist das Schmutzwasserschliessventil 15 geschlossen, und das einströmende Rohwasser füllt den Schmutzwassertrichter 10 sowie den konischen Zylinder des Keramikfilters 7 bis maximal in den Bereich kurz unterhalb der Lagerplatte 5. Das Rohwasser liegt somit nun an der Mantelinnenwand des Keramikfilters 7 an und durchdringt den Filter, bis es in den Bereich zwischen Keramikfilter und Filtergehäuse gelangt. Aus diesem Bereich kann es als gereinigtes Trinkwasser durch den Trinkwasserauslass 13 ausströmen. Der Trinkwasserauslass 13 kann wiederum mit einem Schliessventil 14 versehen sein, welches manuell oder elektrisch betätigbar sein kann. Ist das Schliessventil 14 elektrisch betätigbar, so kann es auch innerhalb des Filtergehäuses angeordnet sein. Selbstverständlich lässt sich jedoch das Schliessventil 14 auch ausserhalb des Filtergehäuses 1 anbringen. In einer besonders einfachen Ausführungsform des erfindungsgemässen Trinkwasserfilters kann der Rohwasseranschluss 11 auch direkt unterhalb der Lagerplatte 5 in die Filtrierzone 8 oberhalb des Filterträgers 16 eingeleitet werden. In diesem Fall entfällt das Umlenkventil 12 und statt dessen kann ausserhalb des Filtergehäuses 1 ein einfaches Schliessventil angebracht sein.

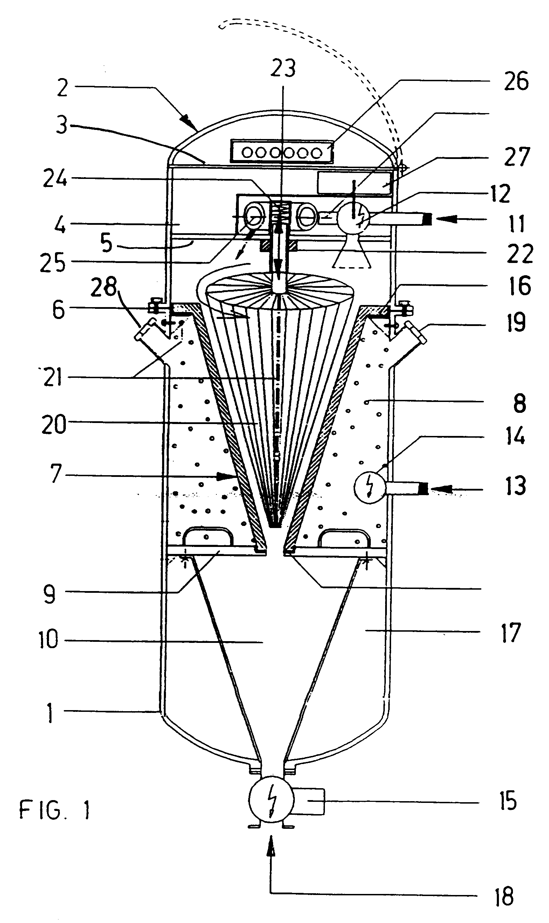

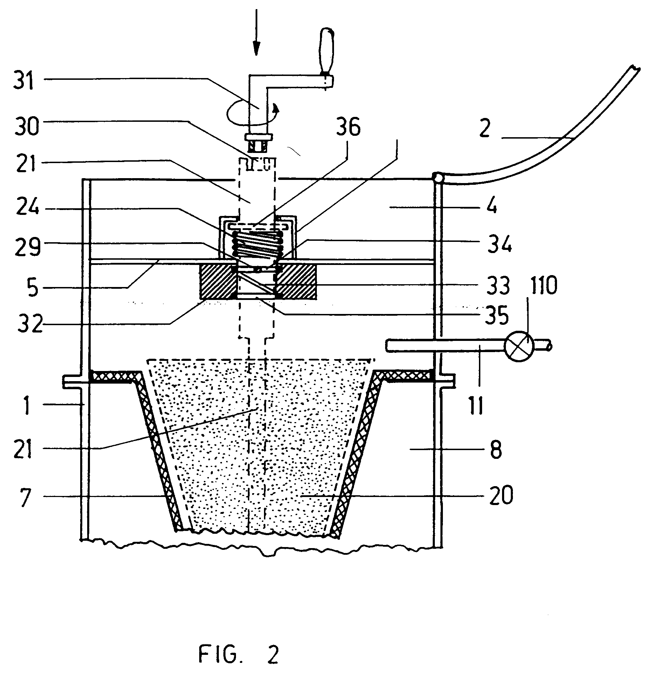

Da hier der Keramikzylinder 7 so benutzt wird, dass das Rohwasser an der Innenfläche des konischen Zylinders anliegt, werden sich auch entsprechend organische und anorganische Schmutzpartikel hier anlagern. Entsprechend ist eine zylindrische Bürste 20 im Filtergehäuse 1 angeordnet, die mit ihrer zentrischen Rotationsachse 21 die Lagerplatte 5 durchsetzt und in einem Lager 22 drehbar gehalten ist. Die Form der kegelförmigen Bürste 20 ist so gestaltet, dass sie exakt in der konischen Zylinderform des Keramikfilters 7 Aufnahme findet. Damit die Bürste nicht ständig auf dem Keramikfilter 7 aufliegt und damit dessen Funktion beeinflusst, ist die Bürste im Lager 22 und in der Lagerplatte 5 in axialer Richtung beweglich gehalten. In der Filtrierlage befindet sich somit die Bürste 20 in einer oberen Position, bei der sie mit dem Keramikfilter nicht in Berührung kommt, während in einer Reinigungslage die Bürste abwärts bewegt worden ist, so dass sie in innige Berührung mit dem Keramikfilter 7 kommt. In dieser Lage lässt sich dann die Bürste in eine Rotationsbewegung setzen. Dies kann wiederum auf einfachste Art manuell (siehe Figur 2) oder wie in Figur 1 dargestellt über den anliegenden Wasserdruck erfolgen.

Nachfolgend wird die bevorzugte Ausführungsform gemäss der Figur 1 näher erläutert, bevor auf die vereinfachte, manuelle Ausführungsform gemäss der Figur 2 eingegangen wird.

Mittels einer Feder 24, die auf die Achse 21 der Bürste 20 wirkt, wird diese in einer oberen, der Filterierlage, gehalten. Dies lässt sich realisieren, indem die Feder 24 als Zugfeder ausgestaltet ist oder mit einer bekannten Kraftumkehrkonstruktion mittels einer Druckfeder. Soll die Bürste 20 in die Reinigungsposition, die untere Position, gebracht werden, so muss das Umlenkventil 12 umgeschaltet werden, so dass einerseits der anliegende Wasserdruck oberhalb der Drehachse 21 auf diese presst und entgegen der Kraft der Feder 24 die Bürste 20 in die Reinigungslage bringt. Hierzu ist die Antriebsachse 21 in einer geschlossenen Buchse gelagert, die als Hydraulikzylinder 23 dient. Beispielsweise dank einer kontrollierten Leckage zwischen Hydraulikzylinder 23 und der als Kolben wirkenden Antriebsachse 21 wird sichergestellt, dass bei Abschluss des Reinigungsvorganges und entsprechend durch die Umstellung des Umlenkventils 12 weggefallenen Druckes das Wasser aus dem Hydraulikzylinder 23 unter Einwirkung der Feder 24 entweichen kann und die Bürste wieder in die obere, Filtrierlage gelangt. Ueber das Umlenkventil 12 wird der Hauptstrom des Rohwassers auf eine Wasserturbine 25 geleitet, deren symbolisch dargestellter Auslass 28 das Rohwasser durch die Lagerplatte 5 hindurch in die Filtrierzone 8 leitet. Die nun rotierende Reinigungsbürste 20 schrubbt die Verunreinigungen von der Mantelinnenwand des Keramikfilters 7, während gleichzeitig das aus der Wasserturbine 25 ausströmende Wasser diese Verunreinigungen abschwemmt, wobei diese in den Schmutzwassertrichter 10 unterhalb der Zwischenplatte 9 gelangen. Während dieser Zeit ist selbstverständlich das Schmutzwasserventil 15 geöffnet, so dass das verunreinigte Rohwasser ausströmen kann. Während dieses Reinigungsvorganges kann im Prinzip das Schliessventil 14 des Trinkwasserauslasses 13 geöffnet bleiben, denn auch während des Reinigungsvorganges wird die Filtrierfunktion qualitativ nicht beeinflusst. Während des Reinigungsvorganges wird aber ein Teil des gereinigten Trinkwassers aus dem Bereich zwischen der äusseren Mantelfläche des Keramikfilters 7 und des Filtergehäuses 1 in umgekehrter Richtung durch den Filter strömen und diesen teilweise entleeren. Um zu verhindern, dass Luft in die nachfolgenden Trinkwasserdruckleitungen gelangt, kann das Schliessventil 14 geschlossen werden. Das Schliessen des Ventiles 14 kann beispielsweise über eine Wasserniveausonde gesteuert sein.

Ist der Reinigungsvorgang beispielsweise nach circa zwei bis drei Minuten abgeschlossen, so wird das Umlenkventil 12 in die Filtrierlage zurückgedreht und das Rohwasser gelangt direkt wieder in die Filtrierzone. Gleichzeitig zieht die Feder 24 die Bürste 20 wieder in die Filtrierlage zurück und das Schmutzwasserschliessventil 15 wird geschlossen. Hat sich in der Zwischenzeit das Schliessventil 14 während des Reinigungsvorganges geschlossen, so wird auch dieses wieder geöffnet. Hiermit ist ein Reinigungszyklus beendet.

Um Betriebsunterbrüche möglichst zu vermeiden, lässt sich der Reinigungsprozess automatisieren, wozu unter dem Deckel 2 auf der Abdeckplatte 3 eine elektrische Steuerung 26 angeordnet ist, die beispielsweise über eine integrierte oder externe Schaltung den Ablauf automatisch steuert. Hierzu müssen selbstverständlich die Ventile 12, 14 und 15 elektrisch betätigbar sein. Entsprechend ist in einem wasserdichten und isolierten Kasten 27 die Speisung und ein eventueller Transformator untergebracht.

Bei der Anwendung in abgelegenen Gebieten mit einer unsicheren elektrischen Versorgung kann es wünschenswert sein, eine weitgehend oder vollständig manuell betätigbare Lösung anzubieten. Dies ist bei der erfindungsgemässen Ausführung ohne weiteres möglich, indem die verschiedenen Ventile manuell betätigbar sind. Auch in diesem Fall lassen sich die beiden Bewegungen der Bürste durch den anliegenden Wasserdruck betätigen. Ist jedoch der Reinheitsgrad des Rohwassers sehr tief, so kann eine Lösung unter Ausnutzung des Wasserdruckes störunganfällig sein. In diesem Fall wird man auch die Bewegungen der Reinigungsbürste 20 manuell bewerkstelligen.
Diese Variante ist lediglich bezüglich der Betätigung in der Figur 2 ausschnittsweise dargestellt. Das Filtergehäuse 1 ist hier wiederum im Schnitt dargestellt, wobei lediglich ein Teil der Filtrierzone 8 und die Antriebszone 4 ersichtlich ist. Der Deckel 2 ist im aufgeklappten Zustand dargestellt. Der Rohwasseranschluss 11 ist hier wie bereits weiter oben erwähnt direkt in die Filtrierzone 8 eingeleitet. Statt des Umlenkventils 12 der Antriebszone 4 ist hier ein einfaches, manuell betätigbares Schliessventil 110 verwendet, welches ausserhalb des Filtergehäuses 1 angeordnet ist. Die Antriebsachse 21 der Reinigungsbürste 20, die wiederum in den Keramikfilter 7 eintaucht, durchsetzt wiederum die Lagerplatte 5, an der unten ein Lager 32 angeordnet ist. Die Drehachse 21 ist hier von einem Mitnehmerbolzen 29 durchsetzt, der radial aus der Drehachse 21 herausragt. Dieser Mitnehmerbolzen 29 greift in eine Gleitbahn im Lager 32 ein. Die Gleitbahn ist in drei Sektoren unterteilt, nämlich eine obere ringförmige Bahn 34, eine untere ringförmige Bahn 35 und eine schraubenförmig gewundene Bahn 33, die die beiden Ringbahnen 34 und 35 miteinander verbindet. Auch hier ist wiederum eine Feder 24 vorhanden, welche die Reinigungsbürste 20 in eine obere, Filtrierlage drückt. Die Feder 24, die hier als Druckfeder ausgestaltet ist, liegt mittelbar auf der Lagerplatte 5 auf und drückt an einen Kragen 36, der fest mit der Antriebsachse 21 verbunden ist. Am oberen Ende ist die Antriebsachse 21 beispielsweise mit einem Innenvier- oder -sechskant 30 versehen, in den eine Handkurbel 31 eingesteckt werden kann. Drückt man auf die Kurbel und dreht diese gleichzeitig in Gegenuhrzeigersinn, so wird der Mitnehmerbolzen 29 in der entsprechenden Winkellage in die schraubenförmige Gleitbahn geschoben und schraubt sich bis in die untere Reinigungslage, wobei dann der Mitnehmerbolzen 29 in der unteren ringförmigen Gleitfläche 35 läuft, während die Druckfeder 24 gespannt ist und die Bürste 20 auf den Keramikfilter 7 aufliegt. Ist nach etlichen Umdrehungen der Keramikfilter 7 genügend gereinigt, so braucht man lediglich die Drehrichtung an der Kurbel 31 zu ändern, worauf die Feder 24 den Mitnehmerbolzen 29 beim Erreichen der entsprechenden Winkellage wieder in die schraubenförmige Gleitbahn 33 presst und von dort nach oben geschraubt wird, bis sie wiederum in der oberen, Filtrierlage in der oberen ringförmigen Gleitbahn 34 verläuft. Nach Beendigung der Reinigung kann die Kurbel 31 abgenommen werden und auf die Lagerplatte 5 gelegt werden, worauf man den Deckel 2 schliessen kann. Die übrigen, hier nicht dargestellten Ventile können in absolut analoger Weise geöffnet und geschlossen werden, wie bei der automatisierten Version.

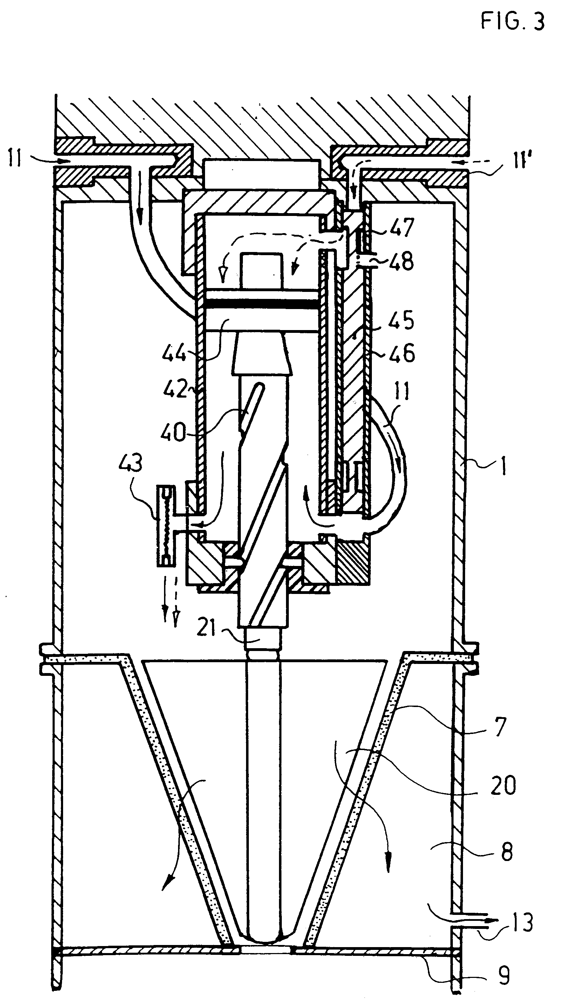

Eine weitere Variante der Bürstenbetätigung ist in der Figur 3 dargestellt Ueber ein nicht dargestelltes Ventil kann die ungereinigte Flüssigkeit, beispielsweise das Rohwasser, direkt über die Zuleitung 11 oder über einen Betätigungsleitungsanschluss 11' der Filtereinheit zugeführt werden.

Die Bürste 7 wird hier auch translatorisch auf und ab bewegt und in Rotation versetzt. Im normalen Filterbetrieb liegt das zu reinigende Fluid über der Leitung 11 an und strömt in einen Zylinder 42, der unten über ein Ueberdruckventil 43 entleert wird. Im Zylinder ist ein doppelseitig beaufschlagbarer Kolben 44 beweglich gelagert. Im Filterbetrieb ist der Kolben 44 im Zylinder 42 nach oben gedrückt. Der Strömungsverlauf ist mit ausgezogenen Pfeilen dargestellt. Nach dem Verlassen des Wassers durch das Ueberdruckventil 43 entspricht der weitere Verlauf dem bisher beschriebenen.

Wird jedoch der Wasserdruck auf den Anschluss 11' angelegt, so wird ein parallel zum Betätigungszylinder 42 verlaufender Steuerkolben 45 in einem Steuerzylinder 46 abwärts bewegt.
Dieser öffnet somit die Betätigungsleitung 47 und das Fluid strömt, wie strichliniert dargestellt, im Bereich oberhalb des Kolbens 44.

Der Kolben 44 wird abwärts gedrückt, das Wasser unterhalb des Kolbens über das Ueberdruckventil 43 entleert und die Antriebsachse 21, die im Kolben 44 gelagert ist, abwärts bewegt und gleichzeitig durch das Gewinde 40 in eine Rotationsbewegung gesetzt. Damit während der Abwärtsbewegung bereits eine Reinigung stattfindet, ist die Antriebsachse 21 hier in sich verdrehgesichert und teleskopisch gestaltet.

Ist der Kolben 44 vollständig nach unten gedrückt, steht die Bürste 20 still und das Fluid kann nicht unnötig ausströmen. Legt man nun wiederum den Druck des Fluids über die Leitung 11 an, so wird der Steuerkolben 45 nach oben bewegt. Der Kolben 34 wird durch das einströmende Fluid nach oben gepresst, während das über dem Kolben 44 befindliche Fluid über die Ueberdruckleitung 48 ausströmen kann, da der Steuerkolben 45 nun diesen Durchgang freigibt. Für die Reinigung wird man folglich die Zuleitungen 11 und 11' mehrmals abwechslungsweise ansteuern, um den gewünschten Reinigungseffekt zu erzielen.

Das Grundprinzip der Erfindung beruht insbesondere auf der konischen Gestalt des Keramikfilters, wodurch mittels einem geringen Hubweg die Reinigungsbürste 20 von einer inaktiven, Filtrierlage in eine aktive, Reinigungslage gebracht werden kann. Eine weitere Bedingung ist selbstverständlich, dass der Filter unten offen ist, so dass die Schmutzpartikel unten abgeführt werden können. Dies hat zudem noch den Vorteil, dass grössere, etwas schwerere Schmutzpartikel auch während des Filtriervorganges nicht im Filterbereich liegen bleiben.

## Patentansprüche

1. Filtereinheit für Fluide mit einem Filtergehäuse (1) und mindestens einem darin gelagerten Filter (7), sowie je mindestens einer Fluidzufuhrleitung (11), einer Ableitung für das gereinigte Fluid (13) und einer Ableitung für ungereinigtes Fluid (18), wobei diese Leitungen mit Ventilen versehen sind, wobei der Filter (7) im Bereich (8) zwischen der Fluidzufuhrleitung (11) und der Ableitung für das gereinigte Fluid (13) dichtend im Gehäuse (1) gelagert ist und die Form eines konischen Zylinders aufweist, wobei an der Oberseite die weite Oeffnung des Zylinders zur Fluidzufuhrseite hinweist, und wobei innerhalb des Filtergehäuses (1) ein mechanisches Reinigungselement (20) drehbar gelagert ist, dadurch gekennzeichnet, dass die Unterseite des konischen Filters aus Keramik mit der engeren Oeffnung in einer Zwischenplatte (9) im Filtergehäuse (1) dichtend aufliegt, dass unterhalb der Zwischenplatte (9) ein Schmutztrichter (10) mit der Ableitung für das verunreinigte Fluid (18) angeordnet ist, und dass das Reinigungselement (20) im konischen Filter (7) von einer Filtrierlage in eine Reinigungslage absenkbar ist, wobei das Reinigungselement in der Reinigungslage in direktem Kontakt mit dem Keramikfilter steht.

2. Filtereinheit nach Anspruch 1, dadurch gekennzeichnet, dass das Reinigungselement (20) gegen die Kraft einer Feder (24) manuell von der Filtrierlage in die Reinigungslage bringbar und mittels einer Kurbel (31) drehbar ist.

3. Filtereinheit nach Anspruch 1, dadurch gekennzeichnet, dass das Reinigungselement in einer Lagerplatte (5) oberhalb des konischen Filters (7) dichtend gelagert ist.

4. Filtereinheit nach Anspruch 3, dadurch gekennzeichnet, dass das Reinigungselement aus einer Reinigungsbürste (20) besteht und dass das Lager (32) der Reinigungsbürste (20) mit einer schraubenförmigen Kulissenführung (33) versehen ist, aus der die Reinigungsbürste (20) durch Drehen in einer Richtung in eine tiefere Reinigungslage und durch Drehen in die Gegenrichtung mit Unterstützung der Federkraft in die Filtrierlage rückführbar ist.

5. Filtereinheit nach Anspruch 1, dadurch gekennzeichnet, dass das Reinigungselement aus einer Reinigungsbürste (20) besteht und dass die Reinigungsbürste (20) hydraulisch durch den anliegenden Druck des zu reinigenden Fluidums bewegbar ist.

6. Filtereinheit nach Anspruch 1, dadurch gekennzeichnet, dass das Reinigungselement aus einer Reinigungsbürste (20) besteht und dass in der Zufuhrleitung für das zu reinigende Fluid (11) innerhalb des Filtergehäuses (1) ein steuerbares Umlenkventil (12) angeordnet ist, mittels dem das Fluid in der Filtrierlage direkt in den Filter (7) einleitbar ist, während in der Reinigungslage das ungereinigte Fluid über eine hydraulische Turbine (25) führbar ist, die die Reinigungsbürste (20) mindestens rotierend treibt.

7. Filtereinheit nach Anspruch 6, dadurch gekennzeichnet, dass das Umlenkventil (12) den Druck des anliegenden, zu reinigenden Fluids auf einen über der Rotationsachse (21) der Reinigungsbürste (20) angeordneten Kolbenzylinder (42) leitet, der die Reinigungsbürste (20) von der Filtrierlage in die Reinigungslage in den Keramikfilter (7) drückt.

8. Filtereinheit nach Anspruch 1, dadurch gekennzeichnet, dass die Ventile (12,14,15) des Filters elektrisch gesteuert sind.

9. Filtereinheit nach Anspruch 1, dadurch gekennzeichnet, dass die Zwischenplatte (9) im Filtergehäuse (1) herausnehmbar gelagert ist.

10. Filtereinheit nach Anspruch 1, dadurch gekennzeichnet, dass das Reinigungselement aus einer Reinigungsbürste (20) besteht und dass der Druck des anliegenden, zu reinigenden Fluids wahlweise auf eine Zuleitung (11) oder einen Betätigungsanschluss (11') leitbar ist, via denen das Fluid oberhalb oder unterhalb eines Kolbens (44) anliegt und diesen mit der daran mittelbar befestigten Bürste auf und ab bewegt.

11. Filtereinheit nach Anspruch 10, dadurch gekennzeichnet, dass die Bürste (20) an einer verdrehgesicherten, teleskopischen Achse (21) gelagert ist, die ein Aussengewinde (40) aufweist, welches abtastbar ist und damit die Bürste (20) bei der Abwärtsbewegung in eine Drehbewegung versetzt.

## Claims

1. A filter unit for fluids having a filter housing (1) and at least one filter (7) supported therein, as well as in each case at least one fluid supply line (11), a discharge line for the cleaned fluid (13) and a discharge line for uncleaned fluid (18), said lines being provided with valves, the filter (7) being sealingly supported in the housing (1) in the area (8) between the fluid supply line (11) and the discharge line for the cleaned fluid (13) and being shaped like a conical cylinder, the wider opening of the cylinder on the top being directed towards the fluid supply side, and a mechanical cleaning element (20) mounted in rotary manner within the filter housing (1), characterised in that the bottom of the conical filter of ceramic sealingly slots with the narrower opening in an intermediate plate (9) in the filter housing (1), that below the intermediate plate (9) is provided a dirt hopper (10) with a discharge line (18) for the contaminated fluid, and that the cleaning element (20) in the conical filter (7) can be lowered from a filtering position to a cleaning position, the cleaning element in the cleaning position being in direct contact with the ceramic filter.

2. A filter unit according to claim 1, characterised in that the cleaning element (20) can be manually brought from the filtering position into the cleaning position counter to the tension of a spring (24) and is rotatable by means of a crank (31).

3. A filter unit according to claim 1, characterised in that the cleaning element is sealingly mounted in a base plate (5) above the conical filter (7).

4. A filter unit according to claim 3, characterised in that the cleaning element comprises a cleaning brush (20) and that the bearing (32) of the cleaning brush (20) is provided with a helical, connecting link guide (33), by which the cleaning brush (20) by rotating in one direction can be brought into the lower cleaning position and by rotating in the opposite direction with the assistance of the spring tension can be returned to the filtering position.

5. A filter unit according to claim 1, characterised in that the cleaning element comprises a cleaning brush (20) and that the cleaning brush (20) is hydraulically movable by the applied pressure of the fluid to be cleaned.

6. A filter unit according to claim 1, characterised in that the cleaning element comprises a cleaning brush (20) and that the supply line for the fluid (11) to be cleaned within the filter housing (1) contains a controllable guide valve (12), by means of which the fluid, in the filtering position, can be directly introduced into the filter (7), whereas in the cleaning position the uncleaned fluid can be guided by means of a hydraulic turbine, which at least drives the cleaning brush (20) in a rotary manner.

7. A filter unit according to claim 6, characterised in that the guide valve (12) directs the pressure of the applied fluid to be cleaned to a ram cylinder (42) positioned over the rotation axis (21) of the cleaning brush (20) and forces the latter from the filtering position into the cleaning position in the ceramic filter (7).

8. A filter unit according to claim 1, characterised in that the filter valves (12, 14, 15) are electrically controlled.

9. A filter unit according to claim 1, characterised in that the intermediate plate (9) is removably supported in the filter housing (1).

10. A filter unit according to claim 1, characterised in that the cleaning element comprises a cleaning brush (20) and that the applied pressure of the fluid to be cleaned can, as desired, be directed to a supply line (11) or to an actuating connection (11'), via which the fluid is applied above or below a plunger (44) and moves the latter up and down with the brush indirectly fixed thereto.

11. A filter unit according to claim 10, characterised in that the brush (20) is mounted on a rotationally fixed, telescopic spindle (21), which has an external thread (40), which can be followed and consequently the brush (20) rotated during the downward movement.

## Revendications

1. Unité de filtrage pour fluides comprenant un boîtier (1) de filtre et au moins un filtre (7) placé dedans, ainsi que chaque fois au moins une conduite d'alimentation (11) du fluide, une conduite d'évacuation du fluide purifié (13) et une conduite d'évacuation du fluide non purifié (18), dans laquelle ces conduites sont pourvues de soupapes, dans laquelle le filtre (7) est placé de manière étanche dans le boîtier (1) dans la zone (8) entre la conduite d'alimentation (11) du fluide et la conduite d'évacuation du fluide purifié (13) et présente la forme d'un cylindre conique, dans laquelle sur le côté supérieur le grand orifice du cylindre est orienté vers le côté alimentation du fluide, et dans laquelle un élément de nettoyage (20) est placé de manière rotative à l'intérieur du boîtier (1) du filtre, caractérisée en ce que le côté inférieur du filtre conique en céramique repose de manière étanche avec l'orifice plus étroit sur une plaque intermédiaire (9) dans le boîtier (1) du filtre, en ce que une trémie à déchets (10) est placée avec la conduite d'évacuation du fluide sale (18) en dessous de la plaque intermédiaire (9), et en ce que l'élément de nettoyage (20) dans le filtre conique (7) peut être abaissé d'une position de filtrage dans une position de nettoyage, l'élément de nettoyage en position de nettoyage étant en contact direct avec le filtre en céramique.

2. Unité de filtrage selon la revendication 1, caractérisée en ce que l'élément de nettoyage (20) peut être amené manuellement contre la force d'un ressort (24) de la position de filtrage dans la position de nettoyage et peut être tourné au moyen d'une manivelle (31).

3. Unité de filtrage selon la revendication 1, caractérisée en ce que l'élément de nettoyage est placé de manière étanche dans une plaque d'appui (5) au-dessus du filtre conique (7).

4. Unité de filtrage selon la revendication 3, caractérisée en ce que l'élément de nettoyage est constitué d'une brosse de nettoyage (20) et en ce que le palier (32) de la brosse de nettoyage (20) est pourvu d'un guide de coulisse hélocoïdal (33) d'où la brosse de nettoyage peut être amenée en tournant dans une direction dans une position de nettoyage plus profonde et ramenée en tournant dans la direction opposée avec l'aide de la force du ressort dans la position de filtrage.

5. Unité de filtrage selon la revendication 1, caractérisée en ce que l'élément de nettoyage est constitué d'une brosse de nettoyage (20) et en ce que la brosse de nettoyage (20) peut être mue hydrauliquement par la pression exercée par le fluide à purifier.

6. Unité de filtrage selon la revendication 1, caractérisée en ce que l'élément de nettoyage est constitué d'une brosse de nettoyage (20) et en ce que dans la conduite d'alimentation pour le fluide à purifier (11) une soupape de déviation (12) manoeuvrable est disposée dans le boîtier (1) du filtre, au moyen de laquelle le fluide dans la position de filtrage peut être amené directement dans le filtre (7) alors que dans la position de nettoyage le fluide non purifié peut être amené à une turbine hydraulique (25) qui actionne au moins de manière rotative la brosse de nettoyage (20).

7. Unité de filtrage selon la revendication 6, caractérisée en ce que la soupape de déviation (12) dirige la pression exercée par le fluide à purifier vers un cylindre à piston (42) disposé au-dessus de l'axe de rotation (21) de la brosse de nettoyage (20), lequel cylindre à piston (42) presse la brosse de nettoyage (20) de la position de filtrage dans la position de nettoyage dans le filtre en céramique (7).

8. Unité de filtrage selon la revendication 1, caractérisée en ce que les soupapes (12, 14, 15) du filtre sont commandées électriquement.

9. Unité de filtrage selon la revendication 1, caractérisée en ce que la plaque intermédiaire (9) dans le boîtier (1) du filtre est disposée de manière amovible.

10. Unité de filtrage selon la revendication 1, caractérisée en ce que l'élément de nettoyage est constitué d'une brosse de nettoyage (20) et en ce que la pression exercée par le fluide à purifier peut être amenée au choix vers une conduite d'alimentation (11) ou vers une conduite de commande (11') par le biais desquelles le fluide passe au-dessus ou en dessous d'un piston (44) et fait monter et descendre celui-ci avec la brosse fixée directement sur lui.

11. Unité de filtrage selon la revendication 10, caractérisée en ce que la brosse (20) est placée sur un axe (21) téléscopique protégé contre la torsion, qui présente un filetage extérieur (40), lequel peut être analysé et met de ce fait la brosse (20) en mouvement rotatif lors du mouvement vers le bas.
